**Europäisches Patentamt**

**European Patent Office**

**Office européen des brevets**

(19)

(11) Numéro de publication : **0 514 272 A1**

## (12) DEMANDE DE BREVET EUROPEEN

(21) Numéro de dépôt : **92401328.7**

(22) Date de dépôt : **14.05.92**

(51) Int. Cl.⁵ : **F04D 13/02,** F04D 29/66, H02K 7/118

(30) Priorité : **14.05.91 FR 9105809**

(43) Date de publication de la demande :
**19.11.92 Bulletin 92/47**

(84) Etats contractants désignés :
**AT BE CH DE DK ES FR GB IT LI**

(71) Demandeur : **SOCIETE ELECTROMECANIQUE
DU NIVERNAIS - SELNI
6, rue Louise-Michel
F-58000 Nevers (FR)**

(72) Inventeur : **Bourdelain, Laurent
Thomson-CSF, SCPI, Cedex 67
92045 Paris la Défence (FR)**
Inventeur : **Cousin, Joel
Thomson-CSF, SCPI, Cedex 67
92045 Paris la Défence (FR)**

(74) Mandataire : **Ruellan, Brigitte et al
THOMSON-CSF SCPI
F-92045 PARIS LA DEFENSE CEDEX 67 (FR)**

(54) **Motopompe centrifuge silencieuse.**

(57) Motopompe centrifuge munie entre l'arbre du rotor de son moteur d'entrainement et sa roue à circulation de liquide ou roue à aubes de sa pompe d'un système à retard de transmission de mouvement rotatif (30) qui comporte deux éléments composants d'accouplement, l'un (35) formé ou fixé sur une extrémité (25) de cet arbre de ce rotor et l'autre (36) formé ou fixé sur cette roue à circulation de liquide (27), caractérisée en ce qu'elle comprend, dans le système à retard de transmission de mouvement rotatif (30), des amortisseurs (52, 53) disposés entre ces deux éléments composants d'accouplement (35, 36) de ce système (30).

FIG.2

EP 0 514 272 A1

La présente invention concerne une motopompe centrifuge silencieuse.

Une motopompe centrifuge comprend habituellement une pompe centrifuge et un moteur électrique d'entraînement. Ce moteur électrique peut être un moteur synchrone, asynchrone, universel ou un moteur électrique d'un autre type connu. Quand ce moteur électrique est un moteur synchrone tel que celui à aimant permanent, son couple de démarrage est relativement faible ou pratiquement insignifiant et une pompe centrifuge entraînée par un tel moteur ne peut pas en général démarrer en charge même si cette charge est relativement faible. Pour cette raison, dans une motopompe centrifuge entraînée par un moteur électrique synchrone, la roue à aubes de la pompe est habituellement montée, mobile en rotation, dans des limites fixes sur une extrémité de l'arbre de ce moteur synchrone d'entraînement afin de permettre à ce moteur de démarrer librement sans charge et d'acquérir un certain couple moteur avant d'accrocher au passage la roue à aubes de la pompe et de l'entraîner.

Une telle motopompe centrifuge comprend souvent un embout cylindrique pourvu d'un ergot terminal axial, solidement fixé sur une extrémité de l'arbre de son moteur synchrone d'entraînement et un moyeu de sa roue à aubes monté mobile sur cet embout cylindrique de manière que son creux toroïdal interrompu par une butée coiffe l'ergot de cet embout.

Lors d'un démarrage de cette motopompe, l'ergot terminal de l'embout porté par l'arbre de son moteur d'entraînement tourne librement dans le creux toroïdal du moyeu, rencontre sur son trajet la butée et entraîne avec lui en rotation la roue à aubes. Le choc entre l'ergot et la butée est souvent violent.

Pour rendre moins bruyant le fonctionnement de cette motopompe, un lubrifiant amortisseur est habituellement introduit dans l'espace disponible entre le creux toroïdal du moyeu de sa roue à aubes et l'ergot terminal de l'embout cylindrique fixé sur l'arbre de son moteur d'entraînement.

Cependant si ce lubrifiant amortisseur' est fluide, son effet d'amortissement est faible si ce lubrifiant est épais le démarrage du moteur devient aléatoire.

Dans une telle motopompe, un joint annulaire d'étanchéité empêchant une fuite de ce lubrifiant amortisseur, monté entre cet embout cylindrique central et le moyeu creux de la roue à aubes est nécessaire. Ce joint d'étanchéité augmente désavantageusement le prix de revient de la motopompe.

La présente invention visant à éviter les inconvénients rappelés ci-dessus permet de réaliser une motopompe centrifuge économique, silencieuse dans son fonctionnement à son démarrage notamment quand son moteur d'entraînement est un moteur électrique synchrone.

Selon l'invention, une motopompe centrifuge munie, entre l'arbre du rotor de son moteur d'entraînement et la roue à circulation de liquide ou roue à aubes de sa pompe, d'un système à retard de transmission de mouvement rotatif qui comporte deux éléments composants d'accouplement, l'un fixé ou formé sur une extrémité de l'arbre de ce rotor, l'autre fixé ou formé sur cette roue à circulation de liquide, est caractérisée en ce que la motopompe comprend dans le système à retard de transmission de mouvement rotatif des amortisseurs disposés entre les deux éléments composants d'accouplement de ce système.

Pour mieux faire comprendre l'invention, on en décrit ci-après un certain nombre d'exemples de réalisation illustré par des dessins ci-annexés dont :

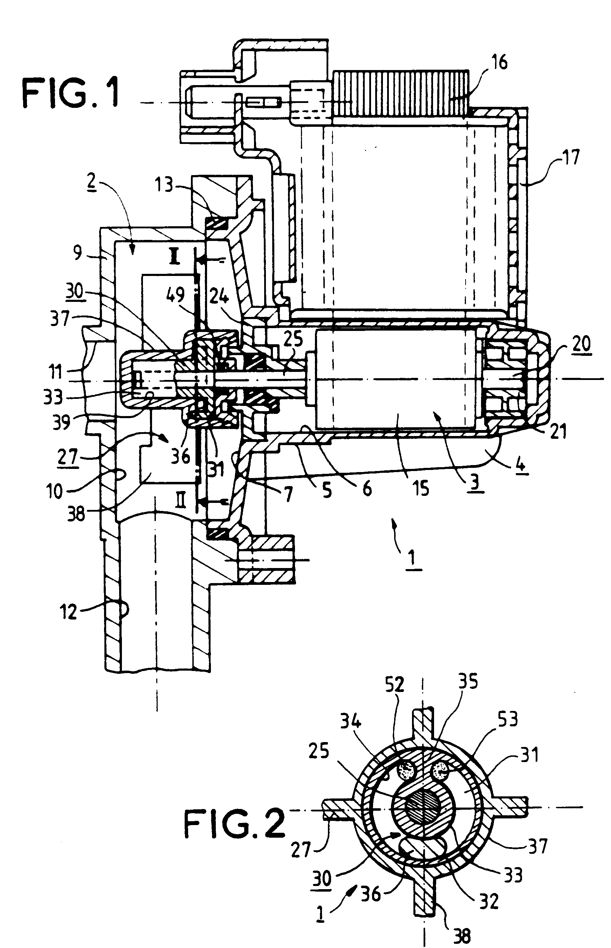

- la figure 1 représente une vue schématique, partielle, en coupe d'une motopompe centrifuge selon un premier exemple de réalisation montrant une pompe centrifuge dont la roue à circulation de liquide ou roue à aubes est entraînée par un moteur électrique synchrone à aimants permanents ;

- la figure 2 représente à une autre échelle, une vue schématique partielle, en coupe transversale suivant un plan II-II de la motopompe de la figure 1 montrant un système à retard de transmission de mouvement rotatif entre l'arbre du moteur d'entraînement et la roue à aubes de la pompe ;

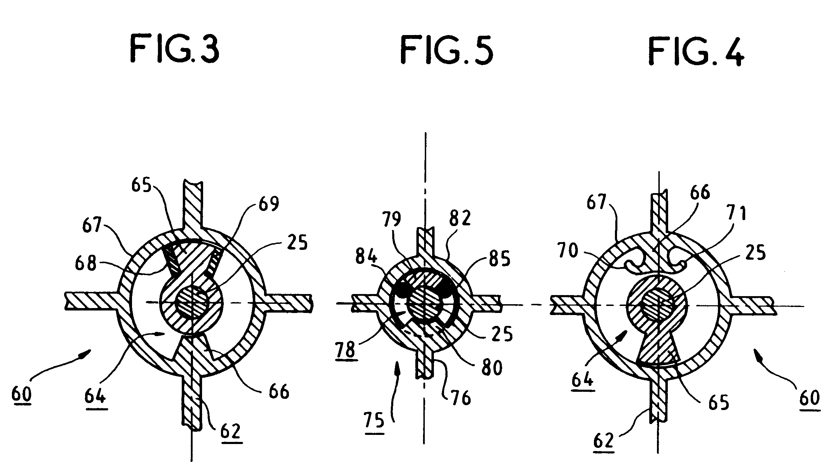

- la figure 3 représente à une autre échelle une vue schématique partielle, en coupe transversale d'une motopompe centrifuge selon un deuxième exemple de réalisation montrant un système à retard de transmission de mouvement rotatif entre l'arbre du moteur d'entraînement et la roue à aubes de la pompe ;

- la figure 4 représente à une autre échelle une vue schématique partielle en coupe transversale d'une motopompe centrifuge selon un troisième exemple de réalisation montrant un système à retard de transmission de mouvement rotatif entre l'arbre du moteur d'entraîneemnt et la roue à aubes de la pompe, et

- la figure 5 représente à une autre échelle une vue schématique partielle en coupe transversale d'une motopompe centrifuge selon un quatrième exemple de réalisation montrant un système à retard de transmission de mouvement rotatif entre l'arbre du moteur d'entraînement et la roue à aubes de la pompe.

Dans le premier exemple de réalisation de l'invention illustré dans les figures 1 et 2, une motopompe centrifuge 1 comprend une pompe centrifuge 2, un moteur électrique d'entraînement 3 et un boîtier commun 4 formé de deux éléments à savoir, d'une part, un corps creux 5 formant une chambre à rotor 6 du moteur d'entraînement 3 et une platine de pompe 7, et d'autre part, un couvercle 9 formant une chambre de pompe 10 munie d'une buse d'entrée 11, d'une buse de sortie 12 et d'un joint d'étanchéité 13.

Le moteur électrique d'entraînement 3 est un moteur synchrone pourvu d'un rotor à aimants permanents 15, logé à l'intérieur de la chambre à rotor 6 et d'un stator 16 fixé autour de cette chambre à rotor 6 et protégé par un capot 17. L'arbre 20 du rotor 15 est maintenu libre en rotation par deux supports-paliers, un support-palier arrière 21 fixé dans le fond de la chambre à rotor et un support-palier avant 24 adjacent à la pompe, servant également d'une cloison mitoyenne de séparation étanche entre la chambre à rotor 6 et la chambre de pompe 10.

Une des extrémités 25 de l'arbre 20 du rotor 15 traversant le support-palier avant 24, porte une roue à circulation de liquide ou roue à aubes 27 de la pompe centrifuge 2 et l'entraîne en rotation dans la chambre de pompe 10. Entre la roue à circulation de liquide ou roue à aubes de la pompe et l'arbre du rotor du moteur électrique synchrone d'entraînement existe un système à retard de transmission de mouvement rotatif qui comprend deux éléments composants d'accouplement, l'un fixé ou formé sur l'extrémité de l'arbre de ce rotor, l'autre fixé ou formé sur cette roue à aubes, et qui permet lors d'un démarrage de la motopompe à ce rotor d'avoir un parcours sans charge ou course libre le permettant d'acquérir un couple moteur nécessaire à l'entraînement de cette roue à aubes et par conséquent au démarrage de la motopompe.

Dans l'exemple illustré aux figures 1 et 2, entre la roue à aubes 27 et l'arbre 20 du rotor 15 existe un système à retard de transmission de mouvement rotatif 30 qui comprend d'une part comme premier élément composant d'accouplement un volant circulaire d'entraînement 31 fixé sur une extrémité 25 de l'arbre 20 du rotor 15 et d'autre part, comme deuxième élément composant d'accouplement un maneton axial 36 solidaire d'un moyeu 37 de la roue à aubes 27.

Le volant circulaire d'entraînement 31 comporte un disque circulaire à trou central 32 surmonté d'un embout axial tubulaire cylindrique 33 et pourvu dans sa surface d'une rainure axiale concentrique 34 à extrémités non jointives séparées par une nervure radiale 35.

La roue à aubes 27 comporte un moyeu creux 37 ayant sur son pourtour des aubes 38 et dans son creux 39 un maneton sectoriel axial 36.

Lors d'un démarrage de la motopompe 1, le volant circulaire 31 porté par l'extrémité 25 de l'arbre du rotor 15 tourne librement à l'intérieur du creux 39 du moyeu 37 de la roue à aubes 27 sans être soumis à aucune charge jusqu'à ce que la nervure radiale 35 qui coupe transversalement la rainure axiale concentrique 34, rencontre sur son trajet le maneton axial 36 du moyeu 37 de la roue à aubes 27, et à partir de ce moment, le volant circulaire 31 et l'arbre 20 du moteur d'entraînement 3 doivent fournir un couple moteur suffisant pour entraîner la roue à aubes 27. Dans ce système à retard de transmission de mouvement rotatif, un parcours sans charge ou course libre du volant 31 porté par l'extrémité 25 de l'arbre 20 du rotor 15 permet à ce rotor d'un moteur électrique synchrone d'entraînement d'acquérir un couple moteur nécessaire et d'effectuer le démarrage de la motopompe 1.

Dans un démarrage de la motopompe 1, une rencontre entre la nervure radiale 35 du volant circulaire d'entraînement 31 et le maneton axial 36 du moyeu 37 de la roue à aubes 27 est un choc relativement violent et bruyant.

Selon l'invention, le motopompe comprend dans le système à retard de transmission de mouvement rotatif qui relie l'arbre du rotor du moteur électrique synchrone d'entraînement et la roue à aubes de la pompe, des amortisseurs disposés entre les éléments composants d'accouplement de ce système pour absorber lors d'un démarrage de la motopompe, les chocs se produisant entre ces éléments composants d'accouplement.

Dans l'exemple des figures 1 et 2, la motopompe 1 comprend dans le système à retard de transmission de mouvement rotatif 30, comme amortisseurs des tampons élastiques 52, 53 disposés dans la rainure axiale concentrique 34 du volant circulaire 31, entre la nervure radiale 35 de ce volant et le maneton axial 36 du moyeu 37 de la roue à aubes 27.

Ces tampons élastiques 52, 53 sont réalisés en une matière élastique synthétique ou naturelle telle qu'un élastomère, un caoutchouc. Ces tampons élastiques 52, 53 sont soit fixés par collage, vissage, insertion, surmoulage ou moulage bi-matière sur les deux côtés de la nervure radiale 35 du volant circulaire d'entraînement 31 ou sur les deux côtés du maneton axial 36 du moyeu 37 de la roue à aubes 27 soit disposés libres en déplacement dans la rainure axiale concentrique 34 du volant circulaire d'entraînement 31.

Ces tampons élastiques 52, 53 absorbent efficacement les chocs entre la nervure radiale 35 du volant d'entraînement et le maneton axial 36 du moyeu 37 de la roue à aubes 27, lors d'un démarrage de la motopompe 1 et en cours de fonctionnement et rendant celle-ci silencieuse dans son utilisation.

Une motopompe 60 selon un deuxième exemple de réalisation est schématiquement et partiellement illustré dans la figure 3. Dans la motopompe 60, des éléments analogues à ceux de la motopompe 1 du premier exemple sont indiqués par les mêmes numéros de référence. La motopompe 60 comprend entre une roue à circulation de liquide ou roue à aubes 62 de sa pompe et un arbre du rotor de son moteur électrique synchrone d'entraînement, un système à retard de transmission de mouvement rotatif 64 ayant deux éléments composants d'accouplement, l'un constitué par un doigt radial 65 d'un embout tubulaire fixé sur une extrémité 25 de l'arbre du rotor 15 et l'autre constitué par un ergot 66 formé ou fixé sur la surface intérieure d'un moyeu creux 67 de la roue à aubes 62 qui coiffe cet embout tubulaire et son doigt radial 65.

Lors d'un démarrage de la motopompe 60, le doigt radial 65 de l'embout tubulaire porté par l'extrémité 25 de l'arbre du rotor tourne librement à l'intérieur du creux du moyeu 67 de la roue à aubes 62 sans être soumis à aucune charge jusqu'à ce que le doigt radial 65 rencontre sur son trajet l'ergot 66 du moyeu creux 67 de la roue à aubes et à partir de ce moment le rotor du moteur d'entraînement ayant acquis un couple moteur suffisant, le doigt radial 65 porté par l'extrémité 25 de l'arbre de ce rotor entraîne la roue à aubes 62 et accomplit le démarrage de la motopompe 60.

Deux tampons élastiques 68, 69 en une matière élastique synthétique ou naturelle telle qu'un élastomère, un caoutchouc servant d'amortisseurs, sont soit fixés par collage, vissage, surmoulage ou tout autre moyeu connu, sur les deux côtés du doigt radial 65 (figure 3) ou sur ceux de l'ergot 66 soit disposées libres en déplacment, dans le moyeu creux 67 entre le doigt radial 65 et l'ergot 66, pour absorber les chocs se produisant entre ceux-ci lors d'un démarrage de la motopompe 60 et durant son fonctionnement et rendre la motopompe 60 silencieuse dans son utilisation.

Un troisième exemple de réalisation illustré dans la figure 4 est une variante de réalisation de l'exemple de la figure 3 selon laquelle la motopompe 60 comprend dans son système à retard de transmission de mouvement rotatif 64, des amortisseurs constitués par des ressorts sous forme de languettes élastiques 70, 71 formées ou fixées sur les deux côtés de l'ergot 66. Ces languettes élastiques 70, 71 amortissent les chocs se produisant entre le doigt radial 65 porté par l'extrémité 25 de l'arbre du moteur d'entraînement et l'ergot 66 du moyeu creux 67 de la roue à aubes 62.

Une motopompe 75 selon un quatrième exemple de réalisation est illustrée dans la figure 5. Dans la motopompe 75 des éléments analogues à ceux de la motopompe 1 des figures 1 et 2 sont indiqués par les mêmes numéros de référence. La motopompe 75 comprend entre une roue à aubes 76 de sa pompe et un arbre du rotor de son moteur électrique synchrone d'entraînement, un système à retard de transmission de mouvement rotatif 78 qui comporte deux éléments composants d'accouplement, l'un constitué par un doigt terminal axial 79 d'un embout tubulaire fixé sur une extrémité 25 de l'arbre du rotor et l'autre constitué par un ergot 80 formé ou fixé sur la surface intérieure d'un moyeu creux 82 de la roue à aubes 76, qui coiffe cet embout tubulaire et son doigt terminal axial 79.

Lors d'un démarrage de la motopompe 75, le doigt terminal axial 79 de l'embout tubulaire porté par l'extrémité 25 de l'arbre du rotor tourne librement à l'intérieur du creux du moyeu 82 de la roue à aubes 76 sans être soumis à aucune charge jusqu'à ce que le doigt terminal axial 79 rencontre sur son trajet l'ergot 80 du moyeu creux 82 de la roue à aubes et à partir de ce moment le rotor du moteur d'entraînement ayant acquis un couple moteur suffisant, le doigt terminal axial 79 porté par l'extrémité 25 de l'arbre de ce rotor entraîne la roue à aubes 76 et accomplit le démarrage de la motopompe 75.

Des billes élastiques 84, 85 en une matière synthétique ou naturelle servant d'amortisseurs sont disposées librement dans le creux du moyeu 82 de la roue à aubes 76 entre le doigt terminal axial 79 et l'ergot 80 pour absorber les chocs se produisant entre ceux-ci lors d'un démarrage de la motopompe 75 et durant son fonctionnement et rendre la motopompe 75 silencieuse dans son utilisation.

**Revendications**

1. Motopompe centrifuge munie, entre l'arbre du rotor de son moteur d'entraînement et la roue à circulation de liquide ou roue à aubes de sa pompe, d'un système à retard de transmission de mouvement rotatif qui comporte deux éléments composants d'accouplement, caractérisée en ce que la motopompe (1, 60, 75) comporte un élément (35, 65, 79) de son système à retard de transmission de mouvement rotatif fixé ou formé sur une extrémité de l'arbre de ce rotor, l'autre élément (36, 66, 80) fixé ou formé sur cette roue à circulation de liquide, et entre lesquels sont disposés des amortisseurs (52-53, 68-69, 70-71, 84-85).

2. Motopompe selon la revendication 1, caractérisée en ce que dans le système à retard de transmission de mouvement rotatif, les amortisseurs disposés entre les éléments composants d'accouplement (35-36, 65-66) sont constitués par des tampons élastiques (52-53 ; 68-69).

3. Motopompe selon la revendication 1, caractérisée en ce que, dans le système à retard de transmission de mouvement rotatif, les amortisseurs disposés entre les éléments composants d'accouplement (65-66) sont constitués par des ressorts tels que ceux sous forme de languettes élastiques (70-71 ).

4. Motopompe selon la revendication 1, caractérisée en ce que dans le système à retard de transmission de mouvement rotatif, les amortisseurs disposés entre les éléments composants d'accouplement (79-80) sont constitués par des billes élastiques (84-85).

5. Motopompe selon la revendication 2, munie d'un système à retard de transmission de mouvement rotatif (30) comportant d'une part un volant circulaire d'entrainement (31) fixé sur une extrémité (25) de l'arbre du rotor et ayant une rainure axiale concentrique (34) à extrémités non jointives séparées par une nervure radiale (35) et d'autre part un maneton axial (36) solidaire d'un moyeu (37) de cette roue à aubes, caractérisé en ce que la motopompe (1) comprend, dans le système à retard de transmission de mouvement rotatif (30), des tampons élastiques (52, 53) servant d'amortisseurs disposés dans la rainure axiale concentrique (34) du volant circulaire d'entraînement (31), entre la nervure radiale (35) de ce volant et le maneton axial (36) du moyeu (37) de la roue à aubes (27).

6. Motopompe selon la revendication 5, caractérisée en ce que dans le système à retard de transmission de mouvement rotatif (30), les tampons élastiques (52, 53) sont fixés soit sur les deux côtés de la nervure radiale (35) du volant circulaire d'entraînement (31), soit sur les deux côtés du maneton axial (36) du moyeu (37) de la roue à aubes (27).

7. Motopompe selon la revendication 5, caractérisée en ce que dans le système à retard de transmission de mouvement rotatif (30), les tampons élastiques (52, 53) sont disposés libres en déplacement dans la rainure axiale concentrique (34) du volant circulaire d'entraînement (31).

8. Motopompe selon l'une des revendications 1 à 4, caractérisée en ce que dans le système à retard de transmission de mouvement rotatif (30), les amortisseurs (52-53, 68-69, 70-71, 84-85) sont réalisés en une matière élastique synthétique ou naturelle telle qu'un élastomère, un caoutchouc.

9. Motopompe selon la revendication 2, munie d'un système à retard de transmission de mouvement rotatif (64) comportant un doigt radial (65) d'un embout tubulaire formé ou fixé sur une extrémité (25) de l'arbre du rotor et une ergot (66) formé ou fixé sur la surface intérieure d'un moyeu creux (67) de la roue à aubes (62) qui coiffe cet embout tubulaire et son doigt radial (65), caractérisée en ce que la motopompe (60) comprend, dans le système à retard de transmission de mouvement rotatif (64), des tampons élastiques (68, 69) servant d'amortisseurs disposés dans le creux du moyeu (67) de la roue à aubes (62) entre le doigt radial (65) et l'ergot (66) de ce moyeu (67).

10. Motopompe selon la revendication 9, caractérise en ce que dans le système à retard de transmission de mouvement rotatif (64) les tampons élastiques (68, 69) sont fixés soit sur les deux côtés du doigt radial (65), soit sur les deux côtés de l'ergot (66) du moyeu (67).

11. Motopompe selon la revendication 3, munie d'un système à retard de transmission de mouvement rotatif (64) qui comporte un doigt terminal radial (65) d'un embout tubulaire formé ou fixé sur une extrémité (25) de l'arbre du rotor et un ergot (66) formé ou fixé sur la surface intérieure d'un moyeu creux (67) de la roue à aubes (62) qui coiffe cet embout tubulaire et son doigt radial (65), caractérisée en ce que la motopompe (60) comprend dans le système à retard de transmission de mouvement rotatif (64) des languettes élastiques (70, 71) formées ou fixées sur les deux côtés de l'ergot (66) de ce moyeu (67).

12. Motopompe selon l'une des revendications 6, 10 et 11, caractérisée en ce que dans le système à retard de transmission de mouvement rotatif (30) les amortisseurs (52, 53) sont fixés par collage, insertion, surmoulage ou moulage bi-matière.

13. Motopompe selon la revendication 4, munie d'un système à retard de transmission de mouvement rotatif (78) qui comporte un doigt terminal axial (79) d'un embout tubulaire formé ou fixé sur une extrémité (25) de l'arbre du rotor, et un ergot (80) formé ou fixé sur la surface intérieure d'un moyeu creux (82) de la roue à aubes (76) qui coiffe cet embout tubulaire et son doigt axial (79), caractérisée en ce que la motopompe (75) comprend dans le système à retard de transmission de mouvement rotatif (78) des billes élastiques (84, 85) servant d'amortisseurs disposés librement dans le creux du moyeu (82) de la roue à aubes (76) entre le doigt terminal axial (79) et l'ergot (80) de ce moyeu (82).

FIG.1

FIG.2

FIG. 4   FIG.5   FIG.3

EP 0 514 272 A1

**Office européen des brevets**

**RAPPORT DE RECHERCHE EUROPEENNE**

Numero de la demande

EP    92 40 1328

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | DE-U-9 016 330 (SIEMENS)<br><br>* page 1, ligne 10 - ligne 27 *<br>* page 2, ligne 1 - ligne 4 *<br>* page 2, ligne 28 - page 4, ligne 29; figures *<br>--- | 1,2,5,6,<br>8-10 | F04D13/02<br>F04D29/66<br>H02K7/118 |
| Y | EP-A-0 207 430 (EASTHORPE)<br><br>* page 1, ligne 1 - ligne 5 *<br>* page 5, ligne 21 - page 10, ligne 12 *<br>* page 11, ligne 11 - page 15, ligne 7; figures 1-5,8-14 *<br>--- | 1,2,5,6,<br>8 | |
| Y | EP-A-0 287 984 (ASKOLL)<br>* colonne 1, ligne 1 - ligne 8 *<br>* colonne 2, ligne 24 - colonne 4, ligne 19; figures *<br>--- | 1,2,9,10 | |
| A | FR-A-2 502 415 (LICENTIA PATENT-VERWALTUNG)<br>* page 1, ligne 1 - ligne 5 *<br>* page 2, ligne 17 - page 3, ligne 3; figure *<br>--- | 1,2,8,10 | **DOMAINES TECHNIQUES RECHERCHES (Int. Cl.5)** |
| A | DE-A-1 453 728 (BüCHE)<br>* page 1, ligne 1 - ligne 3 *<br>* page 3, ligne 3 - ligne 9 *<br>* page 6, ligne 22 - page 9, ligne 16; figures *<br><br>----- | 1,2 | F04D<br>H02K |

Le présent rapport a été établi pour toutes les revendications

| Lieu de la recherche | Date d'achèvement de la recherche | Examinateur |
|---|---|---|
| LA HAYE | 27 JUILLET 1992 | ZIDI K. |

**CATEGORIE DES DOCUMENTS CITES**

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)

8